# EUROPÄISCHE PATENTSCHRIFT

(11) **EP 3 602 841 B1**
(45) Veröffentlichungstag und Bekanntmachung des Hinweises auf die Patenterteilung: **26.10.2022**
(21) Anmeldenummer: 18712125.6
(22) Anmeldetag: 12.03.2018
(51) Int. Cl.: H04B 10/114, H04B 10/80, F21V 8/00, G01S 17/42, G01S 7/00, G01S 7/481

(54) **OPTISCHE SCHNITTSTELLE**
OPTICAL INTERFACE
INTERFACE OPTIQUE

(30) Priorität: 20.03.2017 DE 102017204573
(43) Veröffentlichungstag der Anmeldung: 05.02.2020
(73) Patentinhaber: Robert Bosch GmbH, 70442 Stuttgart (DE)
(72) Erfinder: HOLLECZEK, Annemarie, 4701-970 Braga (PT); BAIER, Matthias, 74251 Lehrensteinsfeld (DE)
(86) Internationale Anmeldenummer: PCT/EP2018/056055
(87) Internationale Veröffentlichungsnummer: WO 2018/172118

(56) Entgegenhaltungen:
- US-A- 5 535 033
- US-A- 5 991 478
- US-A1- 2013 229 668
- US-A1- 2016 231 585

## Beschreibung

### Stand der Technik

Die vorliegende Erfindung betrifft eine optische Schnittstelle. Außerdem betrifft die Erfindung ein rotierendes System, das eine optische Schnittstelle umfasst. Insbesondere ist mit der optischen Schnittstelle eine Datenübertragung kontaktlos ermöglicht.

In der Technik sind rotierende Systeme bekannt, die mittels Schnittstellen Daten von einer rotierenden Komponente (Rotor) auf eine statische Komponente (Stator) übertragen. Ein Beispiel für ein solches rotierendes System sind sogenannte Lidar-Makroscanner, wie in der DE 10 2006 049 935 B4 beschrieben. Für Anwendungen im Automobilbereich sind diese Makroscanner verhältnismäßig groß, wodurch möglichst platzsparend gebaute Einzelkomponenten erwünscht sind. Da häufig mehrere Datenübertragungen parallel gewährleistet sein müssen, werden zusätzliche Schnittstellen benötigt. So sieht der Stand der Technik für jede Datenübertragung eine eigene Schnittstelle vor. Beispielsweise müssen mehrere Laserquellen und Laserdetektoren angesteuert werden, beispielsweise 64 Laser-Detektoren-Paare.

Bei der oben genannten Patentschrift ist außerdem nachteilig, dass die Schnittstellen unmittelbar auf der Achse angeordnet sind. Somit ist dieser Bauraum für weitere Übertragungen nicht nutzbar.

Für eine möglichst schnelle, störungsarme und berührungslose Übertragung von Daten ist eine optische Schnittstelle geeignet. Bekannte Schnittstellen zur Datenübertragung von einem Rotor zu einem Stator werden anhand ihrer Position bezüglich der Symmetrie des Systems in zwei Kategorien eingeteilt. Einerseits gibt es Schnittstellen, die auf der Rotationsachse sitzen, die als "on-axis" bezeichnet werden, andererseits gibt es Schnittstellen, die exzentrisch angeordnete Übertragungskomponenten aufweisen, was als "off-axis" bekannt ist.

Für off-axis-Schnittstellensysteme sind aktive Systeme, wie insbesondere Kopplung durch dynamische Gitter, Kopplung durch Streuzentren, Fluoreszenzoptische Drehübertrager, Infrarot-Drehübertrager mit diskreten Empfängern, oder Ähnlichem, sowie passive Systeme, wie insbesondere Kopplung durch Kerbung, Kopplung durch Verformung oder Biegung, konzentrische Faserbündel, innenverspiegelte Halbschalen, Prismenkoppler, Spiegelgraben oder Ähnliches, bekannt. All diese Schnittstellentypen sind jedoch hauptsächlich aus der akademischen Literatur bekannt und weisen keine Serienreife auf. Häufig ist die Rotationsachse nicht zugänglich oder der Raum wird anderweitig genutzt, wodurch Alternativen benötigt werden.

Ein Nachteil an der oben genannten Patentschrift ist, dass der Raum in der Rotationsachse nicht zugänglich ist oder der Raum anderweitig genutzt wird. Soll ein zusätzliches Signal übertragen werden, so muss eine neuartige Schnittstelle implementiert werden. Andere Schnittstellen sind aus der DE 24 41 359 A1 oder DE 43 42 778 A1 (US 5 535 033) bekannt. Bei der DE 24 41 359 A1 ist ein kreisförmiger Lichtleiter vorhanden, in den kollimiertes Licht eingestrahlt wird. Dies hat zur Folge, dass die Licht-Materie-Kopplung nur mit hohem Verlust von Lichtleistung geschehen kann, da keine Anpassung der Divergenz des Lichts in das einzukoppelnde Element vorgenommen wird. Der Lichtleiter sitzt auf einem Rotor und kann somit Lichtsignale abstrahlen, die von einem stationären Detektor erkannt werden. Allerdings wird wiederum ein großes Volumen zum Umsetzen der optischen Schnittstelle benötigt. Die DE 43 42 778 A1 offenbart ein lateral lichtabstrahlendes Bündel einzelner Fasern. Diese sind mit einem durchsichtigen Überzug versehen. Das Bündel von Fasern ist stationär angeordnet, sodass sich ein Detektor entlang des Bündels von Fasern bewegen kann. Die so entstehende Schnittstelle ist für Computertomografen ausgelegt, sodass sich zwei halbkreisförmige Signalwege ergeben. Dadurch ist eine kontinuierliche Rotation nicht möglich (und auch nicht gewünscht). Durch die Verwendung in Computertomografen steht ein großer Bauraum zur Verfügung, der gemäß der Lehre der D1 auch ausgenutzt wird. Eine platzsparende optische Vorrichtung ist nicht vorgesehen.

### Offenbarung der Erfindung

Die erfindungsgemäße optische Schnittstelle erlaubt eine Datenübertragung zwischen einem sich bewegenden Element und einem stationären Element, insbesondere zwischen einem Rotor und einem Stator. Die Datenübertragung erfolgt während der gesamten Bewegung, insbesondere während der gesamten Rotation des Rotors, kontinuierlich, berührungslos und verschleißfrei. Die optische Schnittstelle ist kostengünstig, robust, störungsarm und platzsparend aufgebaut. Die Datenübertragung ist insbesondere für Signalfolgen beliebiger Frequenz ausgelegt, beispielsweise im zweistelligen kHz-Bereich . Alternativ können auch langsamere bzw. schnellere Signalfolgen übertragen werden. Auch ist die optische Schnittstelle für Lidar-Makroscanner mit bestimmtem Rotordurchmesser ausgelegt, wobei unter einem bestimmten Rotordurchmesser auch ein kleiner Rotordurchmesser verstanden werden kann. Dieser kleine Rohrdurchmesser kann beispielsweise unter 10 cm betragen, idealerweise unter 5 cm. Die optische Schnittstelle kann auch dann eingesetzt werden, wenn eine freie Formfläche zum Aufspannen verwendet wird. Die Datencodierung für das Senden und Empfangen der Daten ist effizient, verlustfrei und ohne optische Leistungskonversion.

Die erfindungsgemäße optische Schnittstelle umfasst eine lichtleitende Faser, zumindest eine Lichtquelle und eine Empfangsvorrichtung. Die lichtleitende Faser weist einen Ringabschnitt auf, der sich ringförmig um eine Rotationsachse erstreckt. Insbesondere ist die lichtleitende Faser an einem Rotor eines Systems anbringbar. Somit ist die lichtleitende Faser um die Rotationsachse vorteilhafterweise rotierbar. Die zumindest eine Lichtquelle ist zum Aussenden von Lichtsignalen in die Faser ausgebildet. Die Faser wiederum dient zum radialen Abstrahlen der von der Lichtquelle ausgesandten Lichtsignale. Insbesondere erfolgt das Abstrahlen von Licht durch den physikalischen Vorgang von Streuung von Licht an Teilchen im Kern der Faser. Die Empfangsvorrichtung dient schließlich zum Empfangen von Lichtsignalen, die von der Faser abgestrahlt werden. Die Empfangsvorrichtung ist vorteilhafterweise stationär angeordnet und ist an einer Position radial außerhalb des Ringabschnitts der Faser angebracht. Somit kann die Empfangsvorrichtung stets Lichtsignale von der Faser empfangen, selbst wenn die Faser um die Rotationsachse rotiert. Durch den Ringabschnitt ist sichergestellt, dass stets ein Bereich der Faser vorhanden ist, der der Empfangsvorrichtung gegenüberliegt, sodass die Empfangsvorrichtung kontinuierlich Lichtsignale empfangen kann. Die Lichtsignale von der Lichtquelle sind durch Faserkopplung in die Faser eingekoppelt. Hierzu wird vorteilhafterweise ein aus dem Stand der Technik bekannter butt-coupler verwendet. Dies hat zur Folge, dass das einzukoppelnde Licht vorteilhafterweise über ein Faserende in die Faser eingebracht wird. Dabei ist das Faserende in einem vordefinierten Abstand zu dem Fokuspunkt der Lichtquelle, die insbesondere eine Laserlichtquelle ist, montiert, sodass eine Divergenz der Lichtsignale, insbesondere des Laserstrahls, zur nummerischen Apertur der Faser passend ausgebildet ist. Ein solcher Vorgang des Lichteinkoppelns in eine Faser ist ebenfalls bekannt. Durch das Lichteinkoppeln in die Faser wird eine hohe Effizienz erreicht, sodass nur geringe optische Verluste vorhanden sind.

Die Unteransprüche haben bevorzugte Weiterbildungen der Erfindung zum Inhalt.

Bevorzugt ist vorgesehen, dass die Faser spiralförmig um die Rotationsachse angeordnet ist. Dies bedeutet, dass die Faser mehrfach um die Rotationsachse verläuft. Somit lässt sich die von der Faser insgesamt abgestrahlte Lichtleistung erhöhen. Dies führt zu einer effizienten Nutzung der durch die Lichtquelle eingebrachten Lichtleistung.

Die Faser strahlt die eingekoppelten Lichtsignale der Lichtquelle vorteilhafterweise diffus ab. Außerdem ist vorgesehen, dass die Faser die Lichtsignale homogen abstrahlt. Das diffuse, insbesondere homogene, Abstrahlen von Lichtsignalen durch Fasern ist insbesondere aus dem Stand der Technik bekannt. Somit ist ein sicheres und zuverlässiges Erfassen der Lichtsignale durch die Empfangsvorrichtung ermöglicht, wobei eine sichere und zuverlässige Datenübertragung gewährleistet ist.

In einer weiteren vorteilhaften Ausführungsform der Erfindung ist vorgesehen, dass die Faser zumindest an dem Ringabschnitt eine Halterung aufweist. Die Halterung erstreckt sich ringförmig um die Rotationsachse und ist zwischen Rotationsachse und Faser angeordnet. Die Halterung dient zur Aufnahme der Faser. Dazu ist die Halterung vorteilhafterweise derart ausgebildet, dass diese eine Form aufweist, die zumindest zu einem Teil des Ringabschnitts der Faser komplementär ausgebildet ist. Eine der Faser zugewandte Fläche der Halterung ist besonders vorteilhaft verspiegelt ausgebildet. Dies führt zu einem Erhöhen der Lichtleistung der abgestrahlten Lichtsignale, da nicht nur der Teil der Faser, der von der Halterung weg weist, Licht abstrahlen kann, sondern das gesamte von der Faser abgestrahlte Licht radial nach außen ausgesandt wird.

Die Faser weist neben dem Ringabschnitt bevorzugt einen Verbindungsabschnitt auf. Der Verbindungsabschnitt dient zum Verbinden des Ringabschnitts mit der Lichtquelle. Der Verbindungsabschnitt kann beliebige Formen aufweisen. Insbesondere ist vorgesehen, dass der Verbindungsabschnitt lediglich zum Führen von Licht zu dem Ringabschnitt ausgebildet ist, nicht jedoch zum Abstrahlen von Lichtsignalen.

Die optische Schnittstelle weist in einer bevorzugten Ausführungsform zumindest zwei Lichtquellen auf. Die Lichtquellen sind zum Aussenden von Lichtsignalen mit unterschiedlichen Wellenlängen ausgebildet. Dabei ist vorgesehen, dass alle Lichtsignale durch Faserkopplung in die Faser eingekoppelt sind. Auf diese Weise lassen sich mehrere Signale gleichzeitig durch die Faser übertragen. Insbesondere sind mehrere Empfangsvorrichtungen vorhanden, wobei jede Empfangsvorrichtung zum Empfangen von Lichtsignalen mit einer der Wellenlänge ausgebildet ist. Alternativ ist eine einzige Empfangsvorrichtung vorhanden, die eine Vielzahl von unterschiedlichen Filtern aufweist, wobei jedem Filter eine der Wellenlängen zugeordnet ist. Die Anzahl an Lichtquellen ist grundsätzlich nicht begrenzt. Somit ermöglicht die optische Schnittstelle ein beliebiges Erweitern der Datenübertragungskapazität, sollte dies für einen konkreten Anwendungsfall notwendig sein.

Die Empfangsvorrichtung weist vorteilhafterweise eine Optik auf. Über die Optik sind die Lichtsignale, die von der Faser ausgesandt werden, auf einen Empfänger projizierbar. Somit wird eine maximale Lichtleistung auf den Empfänger projiziert, sodass der Empfänger sicher und zuverlässig Signale aus dem empfangenen Licht extrahieren kann. Somit ist eine verlustfreie, störungsfreie und insbesondere schnelle Datenübertragung ermöglicht.

Die Empfangsvorrichtung weist bevorzugt einen einzelnen Punkt-Detektor auf. Der Punkt-Detektor ist platzsparend an einem System anbringbar, wodurch der gesamte Bauraumbedarf für die optische Schnittstelle sinkt. Durch den Ringabschnitt der Faser ist sichergestellt, dass der Punkt-Detektor jederzeit Lichtsignale von der Faser empfangen kann.

Die Faser weist bevorzugt einen Durchmesser von maximal 5 mm, insbesondere von maximal 1 mm auf. Somit kann die optische Schnittstelle sehr platzsparend ausgestaltet werden, wodurch sich die optische Schnittstelle insbesondere zur Verwendung in Lidar-Makroscannern eignet. Insbesondere bei Verwendung solcher Lidar-Makroscanner in Fahrzeugen ist ein geringes Volumen der Lidar-Makroscanner wünschenswert. Durch die optische Schnittstelle kann ein solches geringes Volumen erreicht werden, wobei gleichzeitig sichergestellt ist, dass Daten sicher und zuverlässig zwischen einem bewegenden Teil und einem feststehenden Teil übertragen werden können.

Die Erfindung betrifft schließlich ein System, wobei das System insbesondere ein Lidar-Makroscanner ist. Das System umfasst einen Stator und einen Rotor, wobei der Rotor relativ zu dem Stator um eine Rotationsachse rotierbar ist. Außerdem umfasst das System eine optische Schnittstelle wie zuvor beschrieben. Die Empfangsvorrichtung ist an dem Stator angebracht. Somit ist die Empfangsvorrichtung stationär angeordnet. Die Faser wiederum ist an dem Rotor angeordnet, sodass die Faser mit dem Rotor um die Rotationsachse rotierbar ist. Der Ringabschnitt der Faser ist vorteilhafterweise gegenüberliegend von der Empfangsvorrichtung ausgebildet. Insbesondere erfolgt eine Anordnung derart, dass der Empfangsvorrichtung stets ein Bereich des Ringabschnitts der Faser gegenüberliegt. Somit kann die Empfangsvorrichtung jederzeit Lichtsignale von der Faser empfangen, unabhängig davon, ob oder wie schnell die Faser zusammen mit dem Rotor um die Rotationsachse rotiert. Dies bedeutet, dass eine sichere und zuverlässige Datenübertragung zwischen Rotor und Stator ermöglicht ist, wobei besagte Datenübertragung kontaktfrei und damit verschleißfrei erfolgt.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Abbildung eines Systems mit einer optischen Schnittstelle gemäß einem ersten Ausführungsbeispiel der Erfindung,
- Figur 2: eine schematische Abbildung einer optischen Schnittstelle gemäß einem zweiten Ausführungsbeispiel der Erfindung,
- Figur 3: eine schematische Schnittansicht durch eine optische Schnittstelle gemäß der ersten oder zweiten Ausführungsform der Erfindung in einer ersten Alternative,
- Figur 4: eine schematische Schnittansicht durch eine optische Schnittstelle gemäß der ersten oder zweiten Ausführungsform der Erfindung in einer zweiten Alternative,
- Figur 5: eine schematische Schnittansicht durch eine optische Schnittstelle gemäß der ersten oder zweiten Ausführungsform der Erfindung in einer dritten Alternative, und
- Figur 6: eine schematische Abbildung eines Teils einer optischen Schnittstelle gemäß einem dritten Ausführungsbeispiel der Erfindung.

### Ausführungsformen der Erfindung

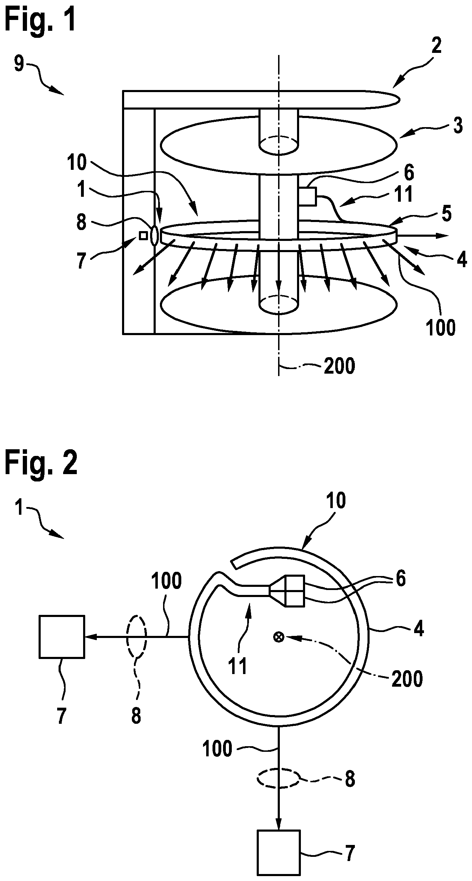

Figur 1 zeigt schematisch ein System 9 mit einer optischen Schnittstelle 1 gemäß einem ersten Ausführungsbeispiel der Erfindung. Das System 9 weist einen Rotor 3 und einen Stator 2 auf. Der Rotor 3 ist gegenüber dem Stator 2 entlang einer Rotationsachse 200 rotierbar. Bei dem System 9 handelt es sich insbesondere um einen Lidar-Makroscanner.

Die optische Schnittstelle 1 dient zur Datenübertragung zwischen dem Rotor 3 und dem Stator 2. Dazu ist eine Empfangsvorrichtung 7, 8 an dem Stator 2 angebracht. Die Empfangsvorrichtung 7, 8 ist ortsfest angeordnet und an dem Stator 2 nicht beweglich. An dem Rotor 3 ist eine Faser 4 angebracht, wobei die Faser 4 zusammen mit dem Rotor 3 um die Rotationsachse 200 rotiert.

Die Faser 4 weist einen Ringabschnitt 10 auf, der sich um die Rotationsachse 200 ringförmig erstreckt. Der Ringabschnitt 10 ist gegenüberliegend der Empfangsvorrichtung 7, 8 angeordnet, sodass bei Rotation des Rotors 3 und damit der Faser 4 um die Rotationsachse 200 stets ein Abschnitt des Ringabschnitts 10 der Empfangsvorrichtung 7, 8 gegenüberliegt. Von der Faser 4, insbesondere von dem Ringabschnitt 10, sind Lichtsignale 100 radial abstrahlbar, sodass diese Lichtsignale 100 von der Empfangsvorrichtung 7, 8 empfangen werden können. Durch den zuvor beschriebenen Aufbau des Rotors 3 mit der Faser 4 ist sichergestellt, dass jederzeit ein Empfangen der Lichtsignale 100 durch die Empfangsvorrichtung 7, 8, möglich ist. Dies wird insbesondere durch das Vorhandensein des Ringabschnitts 10 ermöglicht. Somit ist, unabhängig von einer Rotation des Rotors 3 um die Rotationsachse 200, stets ein Übertragen von Signalen zwischen Rotor 3 und Stator 2 ermöglicht.

Die von der Faser 4 abgestrahlten Lichtsignale 100 werden von einer Lichtquelle 6 erzeugt. Die Lichtquelle 6 ist mit dem Ringabschnitt 10 der Faser 4 über einen Verbindungsabschnitt 11 der Faser 4 verbunden. Außerdem ist die Lichtquelle 6 eingerichtet, Licht durch Faserkopplung in den Verbindungsbereich 11 einzukoppeln. Dies bedeutet, dass das Faserende an dem Verbindungsabschnitt 11 der Faser 4 genau im richtigen Abstand zu dem Fokuspunkt des Lichts der Lichtquelle 6 montiert ist, sodass die Divergenz des Lichtes der Lichtquelle zur nummerischen Apertur der Faser 4 passt. Das Licht der Lichtquelle 6 wird somit mit einer hohen Effizienz in die Faser eingekoppelt.

Bei der Lichtquelle 6 handelt es sich vorteilhafterweise um eine Laserlichtquelle, die zum Aussenden eines Laserstrahls ausgebildet ist. Somit ist der Abstand des Faserendes zu dem Fokuspunkt des Laserstrahls passend gewählt.

Eine Datenübertragung erfolgt somit durch ringförmig abgestrahltes Licht. Insbesondere wird das Licht homogen und diffus von der Faser 4 abgestrahlt. Die so generierten Lichtsignale 100 lassen sich von der Empfangsvorrichtung 7, 8 erkennen, wodurch die Datenübertragung gewährleistet ist. Die Lichtsignale umfassen vorteilhafterweise kurzwelliges, sichtbares Licht.

Die Codierung der Datenübertragung erfolgt vorteilhafterweise bitweise durch eine Pulsweitenmodulation. In diesen Fällen wird nur die Pulsfrequenz und/oder eine An-/Auszeit der Lichtquelle 6 variiert. Eine Alternative besteht in der Datenübertragung durch verschiedene Intensitätsstufen der Lichtquelle 6.

Die Empfangsvorrichtung 7, 8 kann in dem Bereich des Ringabschnitts 10 der Faser 4 frei auf dem Stator 2 platziert werden. Zum Einsammeln des abgestrahlten Lichts, das heißt zum Empfangen der Lichtsignale 100, weist die Empfangsvorrichtung 7, 8 vorteilhafterweise eine Fotodiode auf. Die übertragbare Datenrate steht hauptsächlich in Zusammenhang mit der Pulsfrequenz, das heißt der Ansteuerung, der Lichtquelle 6 und der Bandbreite der Empfangsvorrichtung 7, 8. ab.

Die Empfangsvorrichtung 7, 8 umfasst vorteilhafterweise eine Optik 8 und einen Empfänger 7. Die Optik 8 ist dabei optional und dient insbesondere zum Fokussieren der Lichtsignale 100 auf den Detektor 7. Der Detektor 7 kann, wie bereits beschrieben, vorteilhafterweise eine Fotodiode sein.

Figur 2 zeigt schematisch eine optische Schnittstelle 1 gemäß einem zweiten Ausführungsbeispiel der Erfindung. Dabei ist der grundsätzliche Aufbau identisch zu dem ersten Ausführungsbeispiel. Es werden lediglich mehrere Lichtquellen 6 verwendet, um Licht in die Faser 4 einzukoppeln. Dabei ist vorgesehen, dass jede Lichtquelle 6 Licht mit einer unterschiedlichen Wellenlänge aussendet. Ebenso sind mehrere Empfangsvorrichtungen 7, 8 vorhanden, wobei jede der Empfangsvorrichtungen 7, 8 zum Detektieren von Licht mit unterschiedlicher Wellenlänge ausgebildet ist. Auf diese Weise ist ermöglicht, zwei Datenübertragungen unabhängig voneinander über dieselbe Schnittstelle auszuführen. Die optische Schnittstelle 1 kann somit mehrere, unabhängige Datenströme übertragen, sodass die optische Schnittstelle 1 flexibel an aktuelle Anwendungsfälle angepasst werden kann.

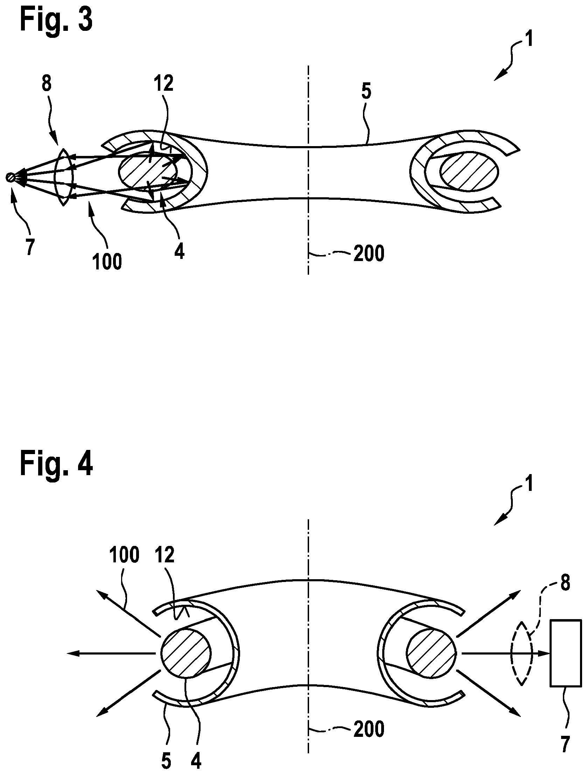

Die Figuren 3 bis 5 zeigen verschiedene Alternativen bei der Ausbildung der Faser 4 für das erste Ausführungsbeispiel und zweite Ausführungsbeispiel der Erfindung. In allen Alternativen ist gemeinsam, dass die Faser 4 durch eine Halterung 5 gehalten ist. Die Halterung 5 erstreckt sich ringförmig um die Rotationsachse 200 und ist zwischen der Rotationachse 200 und Faser 4 angeordnet. Vorteilhafterweise umgibt die Halterung 5 die Faser 4 zumindest teilweise, sodass ein Abstrahlen der Lichtsignale lediglich radial nach außen, das bedeutet von der Rotationsachse 200 weg, erfolgt.

In der in Figur 3 gezeigten ersten Alternative ist eine der Faser 4 zugewandte Fläche 12 verspiegelt ausgebildet. Dies führt dazu, dass sämtliches Licht, das von der Faser 4 abgestrahlt wird, zu der Empfangsvorrichtung 7, 8 gelangen kann. In diesem Fall weist die Empfangsvorrichtung 7, 8 bevorzugt eine Optik 8 auf, um sämtliches Licht zu dem Detektor 7 zu leiten. Somit erfolgt eine optimale Lichtausbeute, wodurch die von der Lichtquelle 6 generierte Lichtleistung optimal genutzt wird.

Figur 4 zeigt eine zweite Alternative. Im Unterschied zu der ersten Alternative ist hier ein Verspiegeln der der Faser 4 zugewandten Fläche 12 nicht vorgesehen. Somit ist nur ein Teil der von der Faser 4 ausgesandten Lichtleistung für die Empfangsvorrichtung 7, 8 verwendbar. Eine Optik 8 kann optional vorhanden sein, ist aber nicht benötigt. Somit ist die zweite Alternative sehr einfach und aufwandsarm zu fertigen.

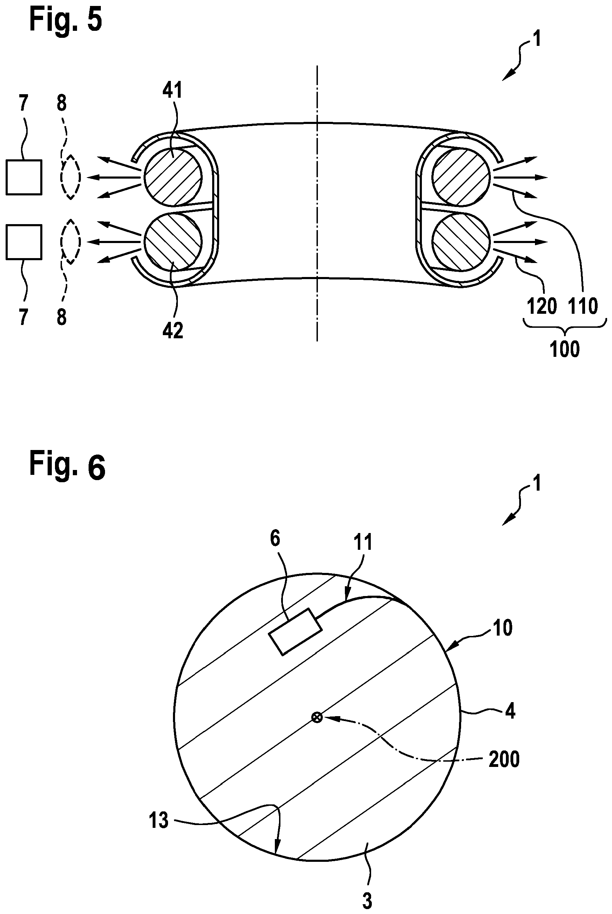

Figur 5 zeigt eine dritte Alternative, bei der eine erste Faser 41 und eine zweite Faser 42 vorhanden ist. Die erste Faser 41 und die zweite Faser 42 sind analog zu der zuvor beschriebenen Faser 4 ausgebildet. Somit ist vorgesehen, dass die ausgesandten Lichtsignale 100 erste Lichtsignale 110 und zweite Lichtsignale 120 umfassen, wobei die ersten Lichtsignale 110 von der ersten Faser 41 ausgesandt werden, während die zweiten Lichtsignale 120 von der zweiten Lichtfaser 42 ausgesandt werden. Die ersten Lichtsignale 110 weisen vorteilhafterweise unterschiedliche Wellenlängen auf wie die zweiten Lichtsignale 120. Es ist vorgesehen, dass Empfangsvorrichtungen 7, 8 für jede der unterschiedlichen Lichtsignale 100 vorhanden sind. Somit ist einerseits eine Empfangsvorrichtung 7, 8 vorhanden, um die ersten Lichtsignale 110 zu empfangen, andererseits ist eine andere Empfangsvorrichtung 7, 8 vorhanden, um die zweiten Lichtsignale 120 zu empfangen. Alternativ kann auch eine einzige Empfangsvorrichtung 7, 8 vorhanden sein, wobei die Empfangsvorrichtung 7, 8 unterschiedliche Filter zum Unterscheiden zwischen dem ersten Lichtsignal 110 und zweiten Lichtsignal 120 aufweist.

Die erste Faser 41 und die zweite Faser 42 kann alternativ auch ein jeweils eigener Ringbereich 10 einer einzigen Faser 4 sein. In diesem Fall wird die von der Faser abgestrahlte Lichtmenge erhöht, wodurch die von der Lichtquelle 6 generierte Lichtleistung effizient genutzt wird.

Figur 6 zeigt einen Teilbereich einer optischen Schnittstelle 1 gemäß einem dritten Ausführungsbeispiel der Erfindung. Dabei ist lediglich die Faser 4 gezeigt, die an dem Rotor 3 angebracht ist. Die Faser 4 ist direkt auf einem Rotorboden des Rotors 3 aufgebracht, wobei die Faser so angeordnet ist, dass jeder Abschnitt des Rotorumkreises von der Faser 4 überdeckt ist. Der Rotor 3 weist dazu eine Nut 13 auf, in der die Faser 4 angebracht ist. Auf diese Weise erfolgt eine besonders platzsparende Anordnung.

In allen Ausführungsbeispielen kann die Faser 4 alternativ auf dem Stator 2 positioniert werden und die Empfangsvorrichtung 7, 8 auf dem Rotor 3. Dies führt zu einer inversen Datenübertragungsrichtung, wobei alle sonstigen beschriebenen Merkmale und Vorteile gleich bleiben.

Die Erfindung weist insbesondere die folgenden Vorteile auf:
- Die optische Schnittstelle ist sehr leicht hinsichtlich ihres Gewichts (von Vorteil auf einem rotierenden System).
- Die diffuse Abstrahlung der Faser beruht auf Streuung von Licht an Objekten, daher tritt keine Zeitverzögerung auf wie z. B. bei Phosphoreszenz oder Fluoreszenz. Zusätzlich wird Licht mit derselben Wellenlänge emittiert wie eingestrahlt wird (keine Konversion hin zu längeren Wellenlängen = Energieverlust).
- Es ist eine verschleißfreie Datenübertragung möglich (keine Berührung der Komponenten).
- Es ist eine störungsarme schnelle Datenübertragung (Lichtgeschwindigkeit c =3.0*108 m/s in Vakuum, marginal langsamer in Fasern) möglich.
- Das Licht, das die Information trägt kann fast verlustfrei in die Faser eingekoppelt werden; dies führt zu effizienter Nutzung der in die Lichtquelle eingebrachten elektrischen Leistung
- Die von der Faser abgestrahlte Leistung kann weiter erhöht werden, wenn die Faser mehrmals um den Rotor gelegt wird; dies führt zu effizienter Nutzung der in die Lichtquelle eingebrachten elektrischen Leistung
- Die Faser besitzt einen kleinen minimalen Biegeradius, das heißt man kann sie an beliebige Konturen in dem Rotor anpassen. Dies macht einen kleinen Rotor mit insbesondere einem Radius <5 cm möglich.
- Die Lichtquelle des gesendeten Lichts kann beliebig auf dem Rotor positioniert werden, da eine Faserkopplung verwendet werden kann.
- Der Empfänger kann vorteilhaft auf dem Stator positioniert werden.
- Die Faser kann ebenso auf dem Stator positioniert werden und der Empfänger auf dem Rotor (inverse Datenübertragungsrichtung).
- Der Empfänger kann ein einzelner Punkt-Detektor sein.
- Es können auch mehrere Empfänger verwendet werden.
- Die Herstellung kann kosteneffizient gestaltet sein ("Fasern ziehen").
- Die optische Schnittstelle ist sehr leicht hinsichtlich ihres Gewichts (von Vorteil auf einem rotierenden System).
- Die optische Schnittstelle kann sehr schmal, d.h. platzsparend in radialer Richtung, ausgelegt werden, da die Faser einen Durchmesser von <1 mm besitzt.
- Mehrere Signale können parallel über die Faser (Medium) übertragen werden ("Faser-Multiplexing").
- Mehrere Fasern können physisch übereinander angeordnet werden (makroskopisches "Faser-Multiplexing").

## Patentansprüche

1. Optische Schnittstelle (1) zum Empfangen der Lichtsignalen, umfassend
• eine lichtleitende Faser (4) mit einem Ringabschnitt (10),
• zumindest eine Lichtquelle (6) zum Aussenden von Lichtsignalen (100) in die Faser (4), wobei die Faser (4) zum radialen Abstrahlen der von der Lichtquelle (6) ausgesandten Lichtsignale (100) ausgebildet ist, und
• eine Empfangsvorrichtung (7, 8) zum Empfangen der von der Faser (4) abgestrahlten Lichtsignale (100),
• wobei die Lichtsignale (100) von der Lichtquelle (6) durch Faserkopplung in die Faser (4) eingekoppelt sind,
**dadurch gekennzeichnet, dass** der Ringabschnitt sich ringförmig um eine Rotationsachse (200) erstreckt und um die Rotationsachse (200) rotierbar ist.

2. Optische Schnittstelle (1) nach Anspruch 1, **dadurch gekennzeichnet, dass** die Faser (4) spiralförmig um die Rotationsachse (200) angeordnet ist.

3. Optische Schnittstelle (1) nach einem der vorhergehenden Ansprüche, **dadurch gekennzeichnet, dass** die Faser (4) die eingekoppelten Lichtsignale (100) der Lichtquelle (6) diffus abstrahlt.

4. Optische Schnittstelle (1) nach einem der vorhergehenden Ansprüche, **dadurch gekennzeichnet, dass** die Faser (4), zumindest an dem Ringabschnitt (10) eine Halterung (5) aufweist,
• wobei sich die Halterung (5) ringförmig um die Rotationsachse (200) erstreckt,
• wobei die Halterung (5) zwischen Rotationsache (200) und Faser (4) angeordnet ist, und
• wobei eine der Faser (4) zugewandte Fläche (12) der Halterung (5) vorteilhafterweise verspiegelt ausgebildet ist.

5. Optische Schnittstelle (1) nach einem der vorhergehenden Ansprüche, **dadurch gekennzeichnet, dass** die Faser (4) neben dem Ringabschnitt (10) einen Verbindungsabschnitt (11) aufweist, der Lichtquelle (6) und Ringabschnitt (10) verbindet.

6. Optische Schnittstelle (1) nach einem der vorhergehenden Ansprüche, **gekennzeichnet durch** zumindest zwei Lichtquellen (6) zum Aussenden von Lichtsignalen (100) mit unterschiedlichen Wellenlängen, wobei alle Lichtsignale durch Faserkopplung in die Faser (4) eingekoppelt sind.

7. Optische Schnittstelle (1) nach einem der vorhergehenden Ansprüche, **dadurch gekennzeichnet, dass** die Empfangsvorrichtung (7, 8) eine Optik (8) aufweist, über die die Lichtsignale (100) auf einen Empfänger (7) projizierbar sind.

8. Optische Schnittstelle (1) nach einem der vorhergehenden Ansprüche, **dadurch gekennzeichnet, dass** die Empfangsvorrichtung (7, 8) einen einzelnen Punkt-Detektor (7) aufweist.

9. Optische Schnittstelle (1) nach einem der vorhergehenden Ansprüche, **dadurch gekennzeichnet, dass** die Faser (4) einen Durchmesser von maximal 5 Millimetern, insbesondere von maximal 1 Millimeter aufweist.

10. System (9), insbesondere LiDAR-Makroscanner, umfassend einen Stator (2), einen Rotor (3) und eine optische Schnittstelle (1) nach einem der vorhergehenden Ansprüche, wobei die Empfangsvorrichtung (7, 8) an dem Stator (2) und die Faser (4) an dem Rotor (3) angeordnet ist, sodass die Faser (4) mit dem Rotor (3) um die Rotationsachse (200) rotierbar ist.

## Claims

1. Optical interface (1) for receiving the light signals, comprising
• a light-guiding fibre (4) having a ring section (10),
• at least one light source (6) for emitting light signals (100) into the fibre (4), the fibre (4) being configured for radially emitting the light signals (100) emitted by the light source (6), and
• a receiving device (7, 8) for receiving the light signals (100) emitted by the fibre (4),
• the light signals (100) from the light source (6) being coupled into the fibre (4) by fibre coupling,
**characterized in that** the ring section extends in a ring-shaped manner around a rotation axis (200) and is rotatable about the rotation axis (200).

2. Optical interface (1) according to Claim 1, **characterized in that** the fibre (4) is arranged spirally around the rotation axis (200).

3. Optical interface (1) according to either of the preceding claims, **characterized in that** the fibre (4) diffusely emits the coupled-in light signals (100) of the light source (6).

4. Optical interface (1) according to any of the preceding claims, **characterized in that** the fibre (4) has a mount (5) at least on the ring section (10),
• the mount (5) extending in a ring-shaped manner around the rotation axis (200),
• the mount (5) being arranged between rotation axis (200) and fibre (4), and
• a surface (12) of the mount (5) that faces the fibre (4) advantageously being formed in a reflectively coated fashion.

5. Optical interface (1) according to any of the preceding claims, **characterized in that** the fibre (4) has besides the ring section (10) a connecting section (11) that connects light source (6) and ring section (10).

6. Optical interface (1) according to any of the preceding claims, **characterized by** at least two light sources (6) for emitting light signals (100) having different wavelengths, all the light signals being coupled into the fibre (4) by fibre coupling.

7. Optical interface (1) according to any of the preceding claims, **characterized in that** the receiving device (7, 8) has an optical unit (8), via which the light signals (100) are projectable onto a receiver (7).

8. Optical interface (1) according to any of the preceding claims, **characterized in that** the receiving device (7, 8) has a single point detector (7).

9. Optical interface (1) according to any of the preceding claims, **characterized in that** the fibre (4) has a diameter of a maximum of 5 millimetres, in particular a maximum of 1 millimetre.

10. System (9), in particular LiDAR macroscanner, comprising a stator (2), a rotor (3) and an optical interface (1) according to any of the preceding claims, the receiving device (7, 8) being arranged on the stator (2) and the fibre (4) being arranged on the rotor (3), such that the fibre (4) together with the rotor (3) is rotatable about the rotation axis (200).

## Revendications

1. Interface optique (1) permettant de recevoir des signaux lumineux, comprenant
• une fibre (4) de guidage de lumière, ayant une section annulaire (10),
• au moins une source de lumière (6) pour envoyer des signaux lumineux (100) dans la fibre (4), la fibre (4) étant réalisée pour l'émission radiale des signaux lumineux (100) envoyés par la source de lumière (6), et
• un dispositif de réception (7, 8) permettant de recevoir les signaux lumineux (100) émis par la fibre (4),
• dans laquelle les signaux lumineux (100) provenant de la source de lumière (6) sont injectés dans la fibre (4) par couplage de fibre,
**caractérisée en ce que** la section annulaire s'étend en forme d'anneau autour d'un axe de rotation (200) et peut tourner autour de l'axe de rotation (200) .

2. Interface optique (1) selon la revendication 1, **caractérisée en ce que** la fibre (4) est disposée en forme de spirale autour de l'axe de rotation (200).

3. Interface optique (1) selon l'une quelconque des revendications précédentes, **caractérisée en ce que** la fibre (4) émet de manière diffuse les signaux lumineux couplés (100) de la source de lumière (6).

4. Interface optique (1) selon l'une quelconque des revendications précédentes, **caractérisée en ce que** la fibre (4) présente un raccord (5) au moins au niveau de la section annulaire (10),
• dans laquelle le raccord (5) s'étend en forme d'anneau autour de l'axe de rotation (200),
• dans laquelle le raccord (5) est disposé entre l'axe de rotation (200) et la fibre (4), et
• dans laquelle une surface (12) du raccord (5), tournée vers la fibre (4), est avantageusement réalisée de manière métallisée.

5. Interface optique (1) selon l'une quelconque des revendications précédentes, **caractérisée en ce que** la fibre (4) présente à côté de la section annulaire (10) une section de liaison (11) qui relie la source de lumière (6) et la section annulaire (10).

6. Interface optique (1) selon l'une quelconque des revendications précédentes, **caractérisée par** au moins deux sources de lumière (6) pour envoyer des signaux lumineux (100) à différentes longueurs d'onde, tous les signaux lumineux étant injectés dans la fibre par couplage de fibre (4).

7. Interface optique (1) selon l'une quelconque des revendications précédentes, **caractérisée en ce que** le dispositif de réception (7, 8) présente une optique (8) qui permet de projeter les signaux lumineux (100) sur un récepteur (7).

8. Interface optique (1) selon l'une quelconque des revendications précédentes, **caractérisée en ce que** le dispositif de réception (7, 8) présente un détecteur ponctuel (7) individuel.

9. Interface optique (1) selon l'une quelconque des revendications précédentes, **caractérisée en ce que** la fibre (4) présente un diamètre d'un maximum de 5 millimètres, en particulier d'un maximum de 1 millimètre.

10. Système (9), en particulier macroscanner LiDAR, comprenant un stator (2), un rotor (3) et une interface optique (1) selon l'une quelconque des revendications précédentes, le dispositif de réception (7, 8) étant disposé sur le stator (2) et la fibre (4) étant disposée sur le rotor (3) de sorte que la fibre (4) peut tourner avec le rotor (3) autour de l'axe de rotation (200).
